# EUROPÄISCHE PATENTSCHRIFT

(11) **EP 2 495 538 B1**
(45) Veröffentlichungstag und Bekanntmachung des Hinweises auf die Patenterteilung: **08.04.2020**
(21) Anmeldenummer: 12001042.6
(22) Anmeldetag: 17.02.2012
(51) Int. Cl.: G01F 1/10, G01F 15/18, G01F 1/115, F24S 40/00, G01F 15/00

(54) **VORRICHTUNG ZUM ERFASSEN DES VOLUMENSTROMES IN EINER VON EINEM FLUID DURCHSTRÖMBAREN ROHRLEITUNG**
DEVICE FOR MEASURING THE VOLUME FLOW IN A PIPE THROUGH WHICH FLUID FLOWS
DISPOSITIF DE DÉTECTION DU DÉBIT VOLUMÉTRIQUE DANS UNE CONDUITE OÙ UN LIQUIDE PEUT S'ÉCOULER

(30) Priorität: 04.03.2011 DE 202011003504 U
(43) Veröffentlichungstag der Anmeldung: 05.09.2012
(73) Patentinhaber: Watts Industries Deutschland Gesellschaft mit beschränkter Haftung, 76829 Landau (DE)
(72) Erfinder: Gaub, Markus, 76835 Roschbach (DE); Cattarius, Marco, 76857 Albersweiler (DE); Haustein, Rolf, 76829 Landau (DE)
(74) Vertreter: Patentanwälte Dr. Keller, Schwertfeger Partnerschaft mbB

(56) Entgegenhaltungen:
- DE-A1- 2 750 269
- DE-A1-102005 004 026
- DE-C1- 19 616 330
- DE-U1-202008 007 797
- US-A- 3 807 229
- US-A- 3 813 940

## Beschreibung

Die Erfindung betrifft eine Vorrichtung zum Erfassen des Volumenstromes in einer von einem Fluid durchströmten Rohrleitung, insbesondere in einer Solaranlage oder einem Frischwasserkreislauf, nach dem Oberbegriff des Anspruchs 1.

Bei Solaranlagen besteht vermehrt der Wunsch, eine Aussage über den Wirkungsgrad oder Ertrag der Anlage zu erhalten. Ein Maß für den Wirkungsgrad oder Ertrag einer Solaranlage gibt die Temperaturdifferenz zwischen Vor- und Rücklauf in einem Kollektorkreislauf und dem durch den Kollektorkreis der Solaranlage strömenden Volumenstrom einer Solarflüssigkeit. Nicht nur bei Solaranlagen sondern auch bei Frischwasseranwendungen besteht vermehrt der Wunsch, den Volumenstrom zu erfassen. So kann bei Frischwasseranwendungen wie etwa Frischwasserkreisläufen mit Hilfe des erfassten Volumenstroms gezielt eine Regleransteuerung vorgenommen werden.

Zur Messung des Volumenstroms eines Fluids in einer Solaranlage oder einem Frischwasserkreislauf sind bereits Vorrichtungen bekannt. In der Regel werden zur Messung des Volumenstromes Turbinendurchflussmesser oder Sensoren nach dem sogenannten Vortex-Prinzip, bei denen ein Störkörper im Durchflusskanal integriert ist, verwendet.

Ein Turbinendurchflussmesser besteht aus einem Rohrstück, in das ein Turbinenrad eingebaut ist. Dieses Turbinenrad dient als Messglied. Der Fluidstrom wird an den Turbinenrädern vorbeigeleitet und treibt das Turbinenrad an. Mit zunehmendem Volumenstrom erhöht sich die Drehzahl der Turbine. Allerdings erhöht sich bei zunehmendem Volumenstrom auch der Druckverlust in der Leitung. Hohe Druckverluste in der Leitung sind jedoch unerwünscht.

Die DE 27 50 269 A1 offenbart einen Woltmann-Flüssigkeitszähler, bei dem in einem Zählergehäuse ein Flügelrad angeordnet ist, dessen Welle auf der Zählereingangsseite in der Eingangslagerbuchse und auf der Zählerausgangsseite in der Ausgangslagerbuchse gelagert ist. Weiterhin ist ein einteiliger Messeinsatz vorgesehen, welcher einen Haltering mit vier Regulieröffnungen aufweist. Die Bohrungen wirken mit Durchlassöffnungen zusammen, um einen Regelteilstrom über eine Gehäuseringkammer und zwischen einem Mantelrohr des Manteleinsatzes und der Innenwand des Gehäuses vorhandenen Ringspalt außerhalb des Messeinsatzes durch den Zähler hindurchzuführen.

Aus der DE 196 16 330 C1 ist ein Verbundwasserzähler bestehend aus einem an eine Hauptleitung anschließbaren Hauptzähler mit einem Messeinsatz zur Erfassung größerer Durchflussmengen und einem in einer zweiteiligen Umgehungsleitung angeordneten Nebenzähler zur Erfassung kleinerer Durchflussmengen bekannt. Der Verbundwasserzähle umfasst ein Gehäuse, in dem der Messeinsatz des Hauptzählers angeordnet ist. Der Messeinsatz ist mit Hilfe einer Dichtung im Bereich des Gehäuseeingangs gegen das Gehäuse abgedichtet. Bei einer anderen Ausführungsform ist ein Befestigungsflansch als Trennwand ausgebildet, der durch eine Dichtung gegenüber dem Gehäuse abgedichtet werden kann.

Die US 3,813,940 A betrifft einen Durchflussmesser mit einem Bypass. Hierfür ist ein Turbinenrad in einem Ventil vorgesehen, wobei das Ventil in einer rohrförmigen Kammer angeordnet ist. Bei normalen Durchflüssen wird der Fluidstrom um das Ventil geführt. Ist der Fluidstrom abgestellt, kann ein Leckagestrom im Inneren des Ventils mit Hilfe des Turbinenrads erfasst werden.

US 3,807,229 A beschreibt einen Durchflussmesser mit einem Bypass, welches ein Gehäuse aufweist, in dem ein Messkanal und eine Vielzahl von Bypasskanälen vorgesehen sind, die in einem ringförmigen Muster um den Messkanal angeordnet sind.

Es ist Aufgabe der vorliegenden Erfindung, eine Vorrichtung zur Erfassung des Volumenstromes in einer von einem Fluid durchströmten Rohrleitung, insbesondere in einer Solaranlage oder einem Frischwasserkreislauf, gemäß dem Oberbegriff des Anspruchs 1 bereitzustellen, bei der der Druckverlust insbesondere bei hohen Volumenströmen reduziert ist.

Erfindungsgemäß wird die Aufgabe dadurch gelöst, dass bei einer Vorrichtung zur Erfassung des Volumenstromes in einer von einem Fluid durchströmbaren Rohrleitung, insbesondere in einer Solaranlage oder einem Frischwasserkreislauf, umfassend eine Armatur mit einem von einem Fluid durchströmbaren Rohrleitungsabschnitt und einen Turbinendurchflussmesser mit einem von dem Fluid durchströmbaren Kanalabschnitt, wobei der Kanalabschnitt in dem Rohrleitungsabschnitt der Armatur angeordnet ist und der Außendurchmesser des Kanalabschnitts im Wesentlichen die gleiche Größe wie der Innendurchmesser des Rohrleitungsabschnitts aufweist, , wobei der Rohrleitungsabschnitt wenigstens eine exzentrische Erweiterung zur Ausbildung eines Bypasskanals aufweist, wobei die exzentrische Erweiterung in Längsrichtung des Rohrleitungsabschnitts in dem Bereich, in dem der Kanalabschnitt in dem Rohrleitungsabschnitt angeordnet ist, sowie in Strömungsrichtung des Fluids vor und hinter dem Kanalabschnitt ausgebildet ist und wobei die exzentrische Erweiterung nut- oder kanalartig in die Rohrwandung des Rohrleitungsabschnitts eingefräst ist.

Die erfindungsgemäße Vorrichtung hat den Vorteil, dass ein Teil des durch eine Rohrleitung strömenden Volumenstromes gezielt um den Turbinendurchflussmesser geführt wird, so dass bei einem gegebenen Turbinendurchflussmesser der Druckverlust insbesondere bei hohen Volumenströmen in dem Kanalabschnitt deutlich reduziert ist und mit Hilfe des gegebenen Volumenstrommessers bei gleichem Druckverlust ein höherer Volumenstrom im Vergleich zu bisher bekannten Vorrichtungen erfasst werden kann.

Es ist von Vorteil, dass der Bypasskanal im Wesentlichen vor und hinter dem Kanalabschnitt jeweils eine Schrägfläche aufweist. Auf diese Weise wird eine vergleichsweise gleichmäßige, d.h. wirbelarme Strömung durch den Bypasskanal erzeugt.

Weiterhin ist es bevorzugt, dass die Armatur eine Anschlussstelle zur Aufnahme eines Temperatursensors aufweist. Auf diese Weise lässt sich nicht nur der Volumenstrom, sondern auch die Temperatur des Volumenstroms messen, so dass beispielsweise eine qualifizierte Aussage zur Effektivität einer Solaranlage gegeben werden kann, in die die erfindungsgemäße Vorrichtung eingebaut sein kann.

Darüber hinaus ist es vorteilhaft, dass die Armatur eine Anschlussstelle zur Aufnahme eines Hallsensors zur Erfassung der Turbinendrehzahl aufweist.

Bei einer bevorzugten Ausführungsform ist die Armatur mit einer Pumpe verbindbar. Hierbei ist es weiterhin von Vorteil, dass wenigstens ein Absperrhahn in der Armatur vorgesehen ist, wobei vorzugsweise der Absperrhahn in Strömungsrichtung des Fluids am hinteren Abschnitt der Armatur angeordnet ist. Auf diese Weise kann die Vorrichtung einfach mit einer Pumpe verbunden und beispielsweise zu Wartungszwecken der Pumpe wieder von dieser entfernt werden, ohne dass das sich in einer Anlage, in der die erfindungsgemäße Vorrichtung eingesetzt ist, befindliche Fluid entfernt werden müsste. Um einen Kreislauf, in den eine Vorrichtung eingebaut ist, einfach mit einem Fluid zu befüllen bzw. zu entleeren, ist es vorteilhaft, dass die Armatur wenigstens eine Rohrabzweigung mit einem Befüll- bzw. Entleerventil aufweist. Besonders bevorzugt ist es, dass die Armatur ein Befüll- und Entleerventil zur Ausbildung einer integrierten Füllund Spülvorrichtung aufweist.

Für einen kompakten, platzsparenden Aufbau der Armatur ist es von Vorteil, dass wenigstens eine Rohrabzweigung mit dem Bypasskanal in Verbindung steht.

Zur Bestimmung des Volumenstromes ist es bevorzugt, dass der mit dem Durchflussmesser erfasste Volumenstrom bezüglich der Größe der Erweiterung des Rohrabschnitts korrigiert ist, so dass der absolute Volumenstrom erfasst werden kann.

Bevorzugte Ausführungsformen der Erfindung werden anhand der beigefügten Zeichnungen beschrieben, in denen zeigen
- Fig. 1: eine perspektivische Ansicht einer Vorrichtung zur Erfassung des Volumenstromes gemäß einer bevorzugten Ausführungsform,
- Fig. 2: einen Querschnitt durch die in Figur 1 dargestellte Vorrichtung zur Erfassung des Volumenstromes entlang der in Fig. 3 dargestellten Schnittlinie C - C,
- Fig. 3: einen Längsschnitt durch die in Figur 1 dargestellte Vorrichtung zur Erfassung des Volumenstromes und
- Fig. 4: die Verwendung der Vorrichtung zur Erfassung des Volumenstromes gemäß einer bevorzugten Ausführungsform in einer Solaranlage.

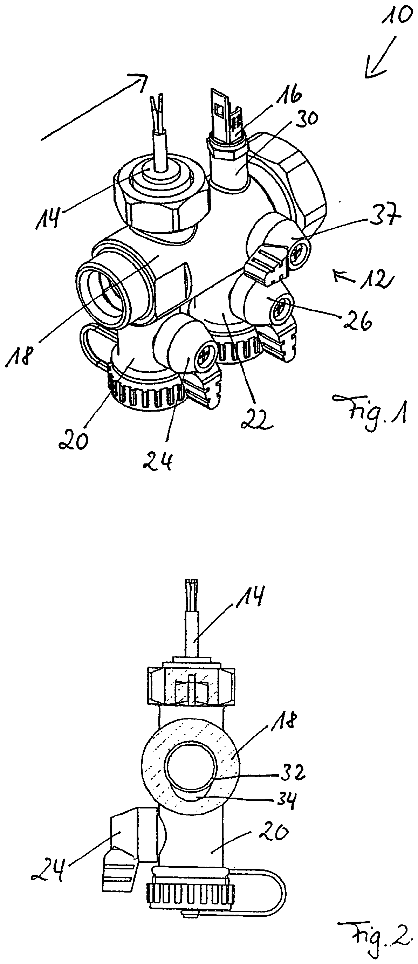

Fig. 1 zeigt eine Vorrichtung zur Erfassung des Volumenstromes 10 in einer von einem Fluid durchströmten Rohrleitung einer Solaranlage, wobei der Pfeil die Strömungsrichtung des Fluids anzeigt. Die Vorrichtung zur Erfassung des Volumenstromes 10 umfasst eine Armatur 12, einen Turbinendurchflussmesser 14 mit einem Hallsensor zur Erfassung der Turbinendrehzahl und einen Temperatursensor 16.

Die von dem Turbinendurchflussmesser 14 und Temperatursensor 16 erfassten Daten sind elektronisch auswertbar.

Die Armatur 12 weist einen Rohrleitungsabschnitt 18 mit zwei Rohrabzweigungen 20 und 22 auf, an denen ein Entleerventil 24 und ein Füllventil 26 angeordnet ist. An dem Rohrleitungsabschnitt 18 ist ein Anschlussstutzen 30 zur Aufnahme des Temperatursensors 16 vorgesehen. Wie besser in Fig. 2 zu erkennen ist, ist im Inneren des Rohrleitungsabschnitts 18 ein Kanalabschnitt 32 des Turbinendurchflussmessers 14 koaxial ausgerichtet, wobei der Außendurchmesser des Kanalabschnitt 32 im Wesentlichen dem Innendurchmesser des Rohrabschnitts 18 entspricht und die Anlagefläche zwischen Kanalabschnitt 32 und Rohrabschnitt 18 im Wesentlichen fluiddicht ausgebildet ist. In dem Kanalabschnitt 32 ist eine nicht dargestellte Turbine angeordnet, die durch einen Fluidstrom angetrieben wird.

Der Rohrleitungsabschnitt 18 ist in dem Bereich, in dem der Kanalabschnitt 32 in dem Rohrleitungsabschnitt 18 angeordnet ist, exzentrisch erweitert. Die exzentrische Erweiterung 34 erstreckt sich in Längsrichtung des Rohrleitungsabschnitts 18 über den Kanalabschnitt 32 hinaus, d.h. auch in einen Bereich vor und hinter dem Kanalabschnitt 32, so dass die exzentrische Erweiterung einen Bypasskanal 36 ausbildet, um Fluid um den Kanalabschnitt 32 herumzuleiten. Die exzentrische Erweiterung 34 kann nut- oder kanalartig in die Rohrwandung des Rohrleitungsabschnitts 18 eingefräst sein.

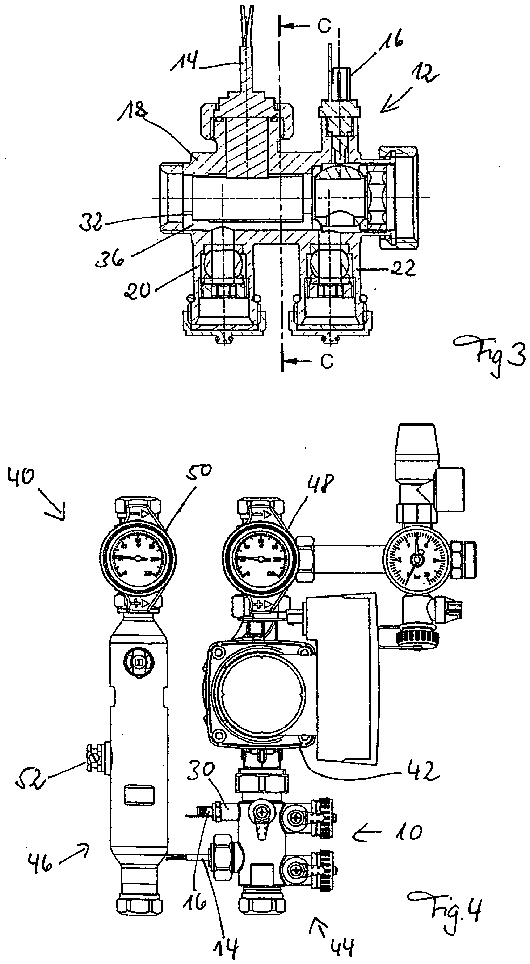

Wenn auch nicht dargestellt, so kann der Übergang von der zentrischen Ausbildung des Innendurchmessers des Rohrleitungsabschnitts 18 zur exzentrischen Erweiterung 34 stetig erfolgen, so dass eine Schrägfläche zwischen dem zentrischen und dem exzentrischen Bereich des Rohrleitungsabschnitts 32 ausgebildet ist. Die Rohrabzweigung 20 mündet, wie in Fig. 3 zu erkennen ist, in den Bypasskanal 36. Das in Strömungsrichtung hintere Ende der Armatur 12 ist mit einer Pumpe 42 (siehe Fig. 4) verbindbar. Zum einfachen Anschließen und Trennen der Armatur 12 von der Pumpe in einem Kreislauf ist ein Absperrhahn 37 vorgesehen.

Der durch den Rohrleitungsabschnitt 18 strömende Fluidstrom tritt bei der dargestellten Ausführungsform sowohl durch den Kanalabschnitt 32 als auch durch den Bypasskanal 36 durch. Auf diese Weise wird nur ein Teilvolumenstrom von dem Turbinendurchflussmesser 14 erfasst. Dies hat den Vorteil, dass der Druckverlust in dem Kanalabschnitt 32 im Vergleich zu dem Fall, in dem der Gesamtvolumenstrom durch den Kanalabschnitt 32 fließt, reduziert ist. Bei einem gegebenen Turbinendurchflussmesser 14 kann somit im Vergleich zu einer Vorrichtung ohne exzentrische Erweiterung des Rohrleitungsabschnitts 18 ein größerer Volumenstrom bei gleichem Druckverlust gemessen werden. Ein gegebener Turbinendurchflussmesser 14 ist bei der dargestellten Ausführungsform somit für einen vergleichsweise großen Volumenstrombereich einsetzbar. Wird der von dem Turbinendurchflussmesser 14 erfasste Volumenstrom mit dem durch den Bypasskanal 36 strömenden Volumenstrom korrigiert, kann der absolute, durch den Rohrleitungsabschnitt 18 strömende Volumenstrom angegeben werden.

Da die beiden mit dem Entleerventil 24 bzw. Füllventil 26 versehenen Rohrabzweigungen 20 und 22 mit dem Bypasskanal 36 in Verbindung stehen, ist ein einfaches Befüllen bzw. Entleeren oder Spülen eines beispielsweise mit Solarflüssigkeit befüllten Rohrkreislaufs möglich.

Dadurch, dass die Rohrabzweigung 20 des Entleerventils 24 in den Bypasskanal 26 mündet, kann das Entleerventil 24 platzsparend an dem Rohrleitungsabschnitt 18 angeordnet werden, so dass die Gesamtlänge des Rohrleitungsabschnitt 18 durch das Vorsehen eines Entleerventils 24 nicht vergrößert wird.

Fig. 4 zeigt die Verwendung der Vorrichtung zur Erfassung des Volumenstromes 10 in einer Regelstation 40 einer Solaranlage. Die Regelstation 40 ist Teil eines Kollektorkreislaufes einer nicht dargestellten Solaranlage. In dem Kollektorkreislauf befindet sich Solarflüssigkeit, die mittels Kollektoren erwärmt wird. Die mittels der Kollektoren erwärmte Solarflüssigkeit wird anschließend zu einem Solarspeicher geführt, in dem sie im Wärmetauscherprinzip die Wärme an einen Brauchwasser- und/oder Heizkreislauf abgibt.

In der in Fig. 4 dargestellten Regelstation 40 ist die Vorrichtung zur Erfassung des Volumenstromes 10 im Vorlauf 44 zum Kollektor angeordnet und stromabwärts mit einer Pumpe 42 verbunden. Die Pumpe 42 pumpt die Solarflüssigkeit zu den Kollektoren, in denen die Solarflüssigkeit erwärmt wird.

Sowohl im Vorlauf 44 als auch im Rücklauf 46 befinden sich Temperaturmessgeräte 48 und 50 sowie Temperatursensoren. In Fig. 4 ist nur der Temperatursensor 16 des Vorlaufs 44 zu erkennen. Der nicht dargestellte Temperatursensor des Rücklaufs 46 ist in der Anschlussstelle 52 vorgesehen. Die Temperaturmessgeräte 48 und 50 dienen dazu, einem Interessenten einfach und schnell die Möglichkeit zu geben, die Temperaturdifferenz zwischen Vorlauf 44 und Rücklauf 46 zu bestimmen, indem die Werte abgelesen werden können.

Für die exakte Bestimmung der Temperaturdifferenz zur Auswertung des Wirkungsgrads der Solaranlage ist die Verwendung der beiden Temperatursensoren vorgesehen, die in einer entsprechenden Anschlussbuchse 30 der Vorrichtung zur Erfassung des Volumenstroms 10 im Vorlauf 44 und in einer als Tauchhülse ausgebildeten Anschlussstelle 52 im Rücklauf 46 angeordnet und für eine elektronische Auswertung der Messergebnisse geeignet sind.

Die Temperatursensoren dienen zur Bestimmung der Temperaturdifferenz der Solarflüssigkeit zwischen Vorlauf 44 und Rücklauf 46. Mittels der ermittelten Temperaturdifferenz und des mit Hilfe des Turbinendurchflussmessers 14 gemessenen Volumenstromes lässt sich der Wirkungsgrad der Solaranlage bestimmen.

Wenn in der dargestellten Ausführungsform nur eine exzentrische Aussparung vorgesehen ist, so können in dem Rohrleitungsabschnitt entlang des Umfangs des Innendurchmessers auch mehrere exzentrische Aussparungen vorgesehen sein.

Die dargestellte Ausführungsform wurde in Zusammenhang mit einer thermischen Solaranlage beschrieben. Die beanspruchte Vorrichtung zur Erfassung des Volumenstroms in einer von einem Fluid durchströmten Rohrleitung ist ebenfalls in anderen Systeme oder Fluidkreisläufen wie etwa einem Frischwasserkreislauf einsetzbar.

## Patentansprüche

1. Vorrichtung zur Erfassung des Volumenstroms in einer von einem Fluid durchströmten Rohrleitung, insbesondere in einer Solaranlage oder einem Frischwasserkreislauf, umfassend eine Armatur (12) mit einem von einem Fluid durchströmbaren Rohrleitungsabschnitt (18) und einen Turbinendurchflussmesser (14) mit einem von dem Fluid durchströmbaren Kanalabschnitt (32), wobei der Kanalabschnitt (32) in dem Rohrleitungsabschnitt (18) der Armatur (12) angeordnet ist und der Außendurchmesser des Kanalabschnitts (32) im Wesentlichen die gleiche Größe wie der Innendurchmesser des Rohrleitungsabschnitts (18) aufweist, wobei der Rohrleitungsabschnitt (18) wenigstens eine exzentrische Erweiterung (34) zur Ausbildung eines Bypasskanals (36) aufweist und wobei die exzentrische Erweiterung in Längsrichtung des Rohrleitungsabschnitts in dem Bereich, in dem der Kanalabschnitt (32) in dem Rohrleitungsabschnitt angeordnet ist, sowie in Strömungsrichtung des Fluids vor und hinter dem Kanalabschnitt (32) ausgebildet ist, **dadurch gekennzeichnet, dass** die exzentrische Erweiterung nut- oder kanalartig in die Rohrwandung des Rohrleitungsabschnitts eingefräst ist.

2. Vorrichtung nach Anspruch 1, **dadurch gekennzeichnet, dass** eine Vielzahl von exzentrischen Erweiterungen entlang des gesamten Umfangs des Rohrleitungsabschnitts vorgesehen sind.

3. Vorrichtung nach einem der vorhergehenden Ansprüche, **dadurch gekennzeichnet, dass** der Bypasskanal (36) vor und hinter dem Kanalabschnitt (32) zwischen der zentrischen Ausbildung und exzentrischen Ausbildung des Rohrleitungsabschnitts jeweils eine Schrägfläche aufweist.

4. Vorrichtung nach einem der vorhergehenden Ansprüche, **dadurch gekennzeichnet, dass** die Armatur (12) eine Anschlussstelle (30) zur Aufnahme eines Temperatursensors (14) aufweist.

5. Vorrichtung nach einem der vorhergehenden Ansprüche, **dadurch gekennzeichnet, dass** die Armatur (12) eine Anschlussstelle zur Aufnahme eines Hallsensors aufweist.

6. Vorrichtung nach einem der vorhergehenden Ansprüche, **dadurch gekennzeichnet, dass** die Armatur (12) mit einer Pumpe (42) verbunden ist.

7. Vorrichtung nach einem der vorhergehenden Ansprüche, **dadurch gekennzeichnet, dass** wenigstens ein Absperrhahn (37) in der Armatur (12) vorgesehen ist.

8. Vorrichtung nach Anspruch 7, **dadurch gekennzeichnet, dass** der Absperrhahn (37) in Strömungsrichtung des Fluids am hinteren Abschnitt der Armatur (12) angeordnet ist.

9. Vorrichtung nach einem der vorhergehenden Ansprüche, **dadurch gekennzeichnet, dass** die Armatur (12) wenigstens eine Rohrabzweigung (20, 22) mit einem Befüll- bzw. Entleerventil (24, 26) aufweist.

10. Vorrichtung nach Anspruch 9, **dadurch gekennzeichnet, dass** das Befüll- bzw. Entleerventil (24, 26) zur Ausbildung einer integrierten Füll- und Spülvorrichtung geeignet ist.

11. Vorrichtung nach einem der Ansprüche 9 oder 10, **dadurch gekennzeichnet, dass** die wenigstens eine Rohrabzweigung (20, 22) mit dem Bypasskanal (36) verbunden ist.

12. Vorrichtung nach einem der vorhergehenden Ansprüche, **dadurch gekennzeichnet, dass** sie für den Einsatz in einer Solaranlagen-Regelstation (40) geeignet ist.

## Claims

1. Device for detecting the volume flow in a pipe through which a fluid flows, in particular in a solar installation or a fresh water circuit, comprising a fitting (12) having a pipe portion (18) through which a fluid can flow, and a turbine flow meter (14) having a channel portion (32) through which the fluid can flow, the channel portion (32) being arranged in the pipe portion (18) of the fitting (12), and the outer diameter of the channel portion (32) being substantially the same size as the inner diameter of the pipe portion (18), the pipe portion (18) having at least one eccentric widened portion (34) for forming a bypass channel (36), and the eccentric widened portion being formed in the longitudinal direction of the pipe portion in the region in which the channel portion (32) is arranged in the pipe portion, and in the direction of flow of the fluid in front of and behind the channel portion (32), **characterised in that** the eccentric widened portion is milled into the pipe wall of the pipe portion in the manner of a groove or channel.

2. Device according to claim 1, **characterised in that** a plurality of eccentric widened portions are provided along the entire circumference of the pipe portion.

3. Device according to either of the preceding claims, **characterised in that** the bypass channel (36) in front of and behind the channel portion (32) in each case has an inclined surface between the centric form and the eccentric form of the pipe portion.

4. Device according to any of the preceding claims, **characterised in that** the fitting (12) has a connection point (30) for receiving a temperature sensor (14).

5. Device according to any of the preceding claims, **characterised in that** the fitting (12) has a connection point for receiving a Hall sensor.

6. Device according to any of the preceding claims, **characterised in that** the fitting (12) is connected to a pump (42).

7. Device according to any of the preceding claims, **characterised in that** at least one stopcock (37) is provided in the fitting (12).

8. Device according to claim 7, **characterised in that** the stopcock (37) is arranged on the rear portion of the fitting (12), in the flow direction of the fluid.

9. Device according to any of the preceding claims, **characterised in that** the fitting (12) has at least one pipe branch (20, 22) which has a filling or emptying valve (24, 26).

10. Device according to claim 9, **characterised in that** the filling or emptying valve (24, 26) is suitable for forming an integrated filling and flushing device.

11. Device according to either claim 9 or claim 10, **characterised in that** the at least one pipe branch (20, 22) is connected to the bypass channel (36).

12. Device according to any of the preceding claims, **characterised in that** it is suitable for use in a solar-installation control station (40).

## Revendications

1. Dispositif de détection du débit volumique dans une conduite parcourue par un fluide, en particulier dans une installation solaire ou un circuit d'eau fraîche, comprenant une robinetterie (12) avec une section de tuyauterie (18) pouvant être parcourue par un fluide et un débitmètre à turbine (14) avec une section de canal (32) pouvant être parcourue par le fluide, dans lequel la section de canal (32) est disposée dans la section de tuyauterie (18) de la robinetterie (12) et le diamètre extérieur de la section de canal (32) est sensiblement de la même taille que le diamètre intérieur de la section de tuyauterie (18), dans lequel la section de tuyauterie (18) présente au moins un élargissement excentrique (34) pour former un canal de dérivation (36) et dans lequel l'élargissement excentrique est formé dans la direction longitudinale de la section de tuyauterie dans la zone dans laquelle la section de canal (32) est disposée dans la section de tuyauterie, et devant et derrière la section de canal (32) dans le sens d'écoulement du fluide, **caractérisé en ce que** l'élargissement est fraisé dans la paroi de tube de la section de tuyauterie à la manière d'une rainure ou d'un canal.

2. Dispositif selon la revendication 1, **caractérisé en ce qu'**une pluralité d'élargissements excentriques sont prévus sur toute la circonférence de la section de tuyauterie.

3. Dispositif selon l'une des revendications précédentes, **caractérisé en ce que** le canal de dérivation (36) présente une surface inclinée respectivement devant et derrière la section de canal (32) entre la configuration centrée et la configuration excentrique de la section de tuyauterie.

4. Dispositif selon l'une des revendications précédentes, **caractérisé en ce que** la robinetterie (12) présente un point de raccordement (30) destiné à recevoir un capteur de température (14).

5. Dispositif selon l'une des revendications précédentes, **caractérisé en ce que** la robinetterie (12) présente un point de raccordement destiné à recevoir un capteur à effet Hall.

6. Dispositif selon l'une des revendications précédentes, **caractérisé en ce que** la robinetterie (12) est reliée à une pompe (42).

7. Dispositif selon l'une des revendications précédentes, **caractérisé en ce qu'**au moins un robinet d'arrêt (37) est prévu dans la robinetterie (12).

8. Dispositif selon la revendication 7, **caractérisé en ce que** le robinet d'arrêt (37) est disposé sur la section arrière de la robinetterie (12) dans le sens d'écoulement du fluide.

9. Dispositif selon l'une des revendications précédentes, **caractérisé en ce que** la robinetterie (12) comprend au moins un embranchement de tube (20, 22) avec une vanne de remplissage ou de vidange (24, 26).

10. Dispositif selon la revendication 9, **caractérisé en ce que** la vanne de remplissage ou de vidange (24, 26) est adaptée à former un dispositif de remplissage et de rinçage intégré.

11. Dispositif selon l'une des revendications 9 ou 10, **caractérisé en ce que** ledit au moins un embranchement de tube (20, 22) est relié au canal de dérivation (36).

12. Dispositif selon l'une des revendications précédentes, **caractérisé en ce qu'**il est adapté à être utilisé dans une station de régulation d'installation solaire (40).
